# EUROPEAN PATENT APPLICATION

(11) **EP 4 480 910 A1**
(43) Date of publication of application: **25.12.2024**
(21) Application number: 23752669.4
(22) Date of filing: 24.01.2023
(51) Int. Cl.: C01B 32/168, C01B 32/174

(54) **OXIDIZED CARBON NANOTUBE ASSEMBLY, DISPERSION LIQUID USING SAME, AND MANUFACTURING METHOD FOR OXIDIZED CARBON NANOTUBE ASSEMBLY**

(30) Priority: 14.02.2022 JP 2022020746
(71) Applicant: Zeon Corporation, Tokyo 100-8246 (JP)
(72) Inventor: KATADA Arinobu, Tokyo 100-8246 (JP); TAKAI Hirokazu, Tokyo 100-8246 (JP)
(74) Representative: Maiwald GmbH
(86) International application number: PCT/JP2023/002149
(87) International publication number: WO 2023/153201

(57) **Abstract**

Provided is an oxidized carbon nanotube assembly having excellent dispersibility in a polar solvent. The oxidized carbon nanotube assembly includes oxidized single-walled carbon nanotubes, has a ratio of the number of oxidized single-walled carbon nanotubes relative to the total number of oxidized carbon nanotubes in the oxidized carbon nanotube assembly of 51% or more, and has a heat of immersion per unit area in water of not less than 1,500 mJ/m² and not more than 10,000 mJ/m².

## Description

### TECHNICAL FIELD

The present disclosure relates to an oxidized carbon nanotube assembly, a dispersion liquid using the same, and a method of producing an oxidized carbon nanotube assembly.

### BACKGROUND

Carbon nanotubes (hereinafter, also referred to as "CNTs") have various excellent characteristics such as mechanical strength, optical characteristics, electrical characteristics, thermal characteristics, and molecular adsorption capacity, and the development thereof as functional materials such as electronic device materials, optical element materials, and conductive materials is anticipated.

On the other hand, from a viewpoint of causing CNTs to sufficiently display these characteristics, it is necessary to cause uniform dispersion of CNTs in a solvent such as water during use thereof. However, CNTs have a high tendency to aggregate and become entangled with one another and are extremely difficult to uniformly disperse.

In recent years, there has been ongoing development of techniques for improving the dispersibility of CNTs. As one example of a technique relating to improvement of CNT dispersibility, Patent Literature (PTL) 1 proposes fibrous carbon nanostructures that include CNTs and that have at least one absorption peak in a wavenumber region of not less than 500 cm⁻¹ and not more than 600 cm⁻¹ in a light absorption spectrum.

### CITATION LIST

### Patent Literature

PTL 1: WO2018/180901A1

### SUMMARY

### (Technical Problem)

There is room for further improvement with regards to conventional CNTs and assemblies thereof in terms of increasing dispersibility in polar solvents.

Accordingly, one object of the present disclosure is to provide an oxidized carbon nanotube assembly having excellent dispersibility in a polar solvent and a dispersion liquid using the same.

Another object of the present disclosure is to provide a method of producing an oxidized carbon nanotube assembly having excellent dispersibility in a polar solvent.

### (Solution to Problem)

The inventors conducted diligent investigation with the aim of solving the problem set forth above. The inventors made a new discovery that in the case of an oxidized carbon nanotube assembly that includes oxidized single-walled carbon nanotubes in a specific ratio and that has a heat of immersion per unit area in water that is within a specific range, this oxidized carbon nanotube assembly has excellent dispersibility in a polar solvent, and, in this manner, the inventors completed the present disclosure.

The inventors also made a new discovery that by subjecting a carbon nanotube assembly to heat treatment in a specific atmosphere at not lower than a specific temperature and by subsequently performing acid treatment thereof, it is possible to obtain an oxidized carbon nanotube assembly having excellent dispersibility in a polar solvent, and, in this manner, the inventors completed the present disclosure.

Specifically, with the aim of advantageously solving the problem set forth above, [1] a presently disclosed oxidized carbon nanotube assembly comprises oxidized single-walled carbon nanotubes, wherein a ratio of a number of the oxidized single-walled carbon nanotubes relative to a total number of oxidized carbon nanotubes in the oxidized carbon nanotube assembly is 51% or more, and heat of immersion per unit area of the oxidized carbon nanotube assembly in water is not less than 1,500 mJ/m² and not more than 10,000 mJ/m². With an oxidized carbon nanotube assembly such as set forth above, it is possible to obtain an oxidized carbon nanotube assembly having excellent dispersibility in a polar solvent.

The terms "oxidized carbon nanotubes" and "oxidized single-walled carbon nanotubes" as used in the present disclosure respectively refer to carbon nanotubes and single-walled carbon nanotubes having an oxygen atom ratio of more than 4 at%. The oxygen atom ratio of oxidized carbon nanotubes and oxidized single-walled carbon nanotubes can be determined by a method described in the EXAMPLES section of the present specification.

The "ratio of the number of oxidized single-walled carbon nanotubes relative to the total number of oxidized carbon nanotubes in an oxidized carbon nanotube assembly" referred to in the present specification can be determined by a method described in the EXAMPLES section of the present specification.

The "heat of immersion per unit area (units: mJ/m²)" referred to in the present specification is a value determined by dividing the heat of immersion (units: mJ/g) by the specific surface area (units: m²/g) of an oxidized carbon nanotube assembly.

The "heat of immersion (units: mJ/g)" referred to in the present specification can be determined by a method described in the EXAMPLES section of the present specification.

The "specific surface area (units: m²/g)" referred to in the present specification means the nitrogen adsorption specific surface area measured according to the BET method and can be determined by a method described in the EXAMPLES section of the present specification.

[2] The oxidized carbon nanotube assembly according to the foregoing [1] preferably has a specific surface area of not less than 1 m²/g and less than 100 m²/g.

When the specific surface area is within the range set forth above, dispersibility of the oxidized carbon nanotube assembly in a polar solvent can be improved.

[3] In the oxidized carbon nanotube assembly according to the foregoing [1] or [2], heat of immersion per unit area of the oxidized carbon nanotube assembly in n-octane is preferably not less than 150 mJ/m² and not more than 1,000 mJ/m².

When the heat of immersion per unit area in n-octane is within the range set forth above, dispersibility of the oxidized carbon nanotube assembly in a polar solvent can be improved.

Moreover, with the aim of advantageously solving the problem set forth above, [4] a presently disclosed dispersion liquid comprises the oxidized carbon nanotube assembly according to any one of the foregoing [1] to [3] dispersed in a polar solvent. A dispersion liquid such as set forth above has good dispersion of an oxidized carbon nanotube assembly.

Furthermore, with the aim of advantageously solving the problem set forth above, [5] a presently disclosed method of producing an oxidized carbon nanotube assembly comprises: performing heat treatment of a carbon nanotube assembly including single-walled carbon nanotubes in an oxygen-containing atmosphere at higher than 550°C to obtain a pre-oxidation carbon nanotube assembly; and performing acid treatment of the pre-oxidation carbon nanotube assembly to obtain an oxidized carbon nanotube assembly. With a method of producing an oxidized carbon nanotube assembly such as set forth above, it is possible to obtain an oxidized carbon nanotube assembly having excellent dispersibility in a polar solvent.

[6] In the method of producing an oxidized carbon nanotube assembly according to the foregoing [5], nitric acid is preferably used in the acid treatment.

By using nitric acid in the acid treatment, it is possible to obtain an oxidized carbon nanotube assembly having even better dispersibility in a polar solvent.

### (Advantageous Effect)

According to the present disclosure, it is possible to provide an oxidized carbon nanotube assembly having excellent dispersibility in a polar solvent and a dispersion liquid using the same.

Moreover, according to the present disclosure, it is possible to provide a method of producing an oxidized carbon nanotube assembly having excellent dispersibility in a polar solvent.

### BRIEF DESCRIPTION OF THE DRAWINGS

In the accompanying drawings:

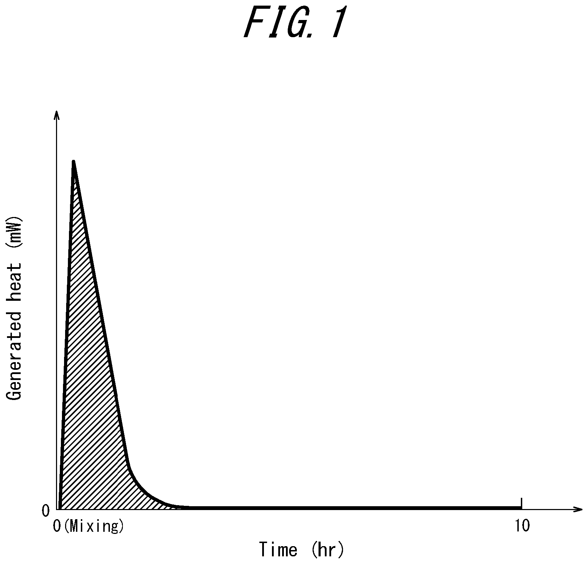

FIG. 1 is a graph schematically illustrating change of heat (mW) generated when an oxidized CNT assembly produced in Example 1 was immersed in water.

### DETAILED DESCRIPTION

The following provides a detailed description of embodiments of the present disclosure.

The presently disclosed oxidized CNT assembly can be used as a constituent element of an electronic product in a production process of an electronic product such as an electronic component (for example, an electronic circuit such as a logic circuit, memory such as DRAM, SRAM, or NRAM, a semiconductor device, an interconnect, a complementary MOS, or a bipolar transistor); a chemical sensor (detector, etc.) for a trace gas or the like; a biosensor (measurement instrument, etc.) for DNA, protein, or the like; or a conductive film for a solar cell, touch panel, or the like, for example, without any specific limitations. Moreover, the presently disclosed oxidized CNT assembly can be used in the form of a dispersion liquid having the presently disclosed oxidized CNT assembly dispersed in a polar solvent such as water, for example.

Note that the presently disclosed oxidized CNT assembly can be produced using the presently disclosed method of producing an oxidized CNT assembly that is subsequently described.

### (Oxidized CNT assembly)

The presently disclosed oxidized CNT assembly is an assembly including oxidized CNTs, and may optionally further include CNTs other than oxidized CNTs (for example, CNTs having an oxygen atom ratio of 4 at% or less) to the extent that the object of the present disclosure is not lost. The term "oxidized CNTs" as used here is inclusive of various oxidized CNTs such as oxidized single-walled CNTs and oxidized multi-walled CNTs.

The presently disclosed oxidized CNT assembly includes oxidized single-walled CNTs as the oxidized CNTs and may optionally further include oxidized CNTs other than oxidized single-walled CNTs (hereinafter, also referred to as "other oxidized CNTs") as the oxidized CNTs. The presently disclosed oxidized CNT assembly has a ratio of the number of oxidized single-walled CNTs relative to the total number of oxidized CNTs in the oxidized CNT assembly of 51% or more and has a heat of immersion per unit area (hereinafter, "heat of immersion per unit area" is also referred to as "unit heat of immersion") in water of not less than 1,500 mJ/m² and not more than 10,000 mJ/m². With an oxidized CNT assembly such as set forth above, it is possible to obtain an oxidized CNT assembly having excellent dispersibility in a polar solvent. The reason for this is presumed to be related to affinity between the oxidized CNT assembly and a polar solvent, electrostatic repulsions between the oxidized CNTs, and so forth, but is not necessarily clear. However, the subsequently described example and comparative examples clearly demonstrate that when the ratio of the number of oxidized single-walled CNTs relative to the total number of oxidized CNTs in an oxidized CNT assembly is 51% or more and when the unit heat of immersion of the oxidized CNT assembly in water is not less than 1,500 mJ/m² and not more than 10,000 mJ/m², the oxidized CNT assembly has excellent dispersibility in a polar solvent.

Moreover, when the ratio of the number of oxidized single-walled CNTs relative to the total number of oxidized CNTs in an oxidized CNT assembly is 51% or more and when the heat of immersion per unit area of the oxidized CNT assembly in water is not less than 1,500 mJ/m² and not more than 10,000 mJ/m², it is possible to obtain an oxidized CNT assembly having excellent dispersion stability in a polar solvent. Although the reason for this is not necessarily clear, it is presumed to be due to increased electrostatic repulsions between the oxidized CNTs.

Note that the presently disclosed oxidized CNT assembly has even better dispersibility and dispersion stability in a polar solvent including a hydroxy group such as water or an alcohol, and has particularly good dispersibility and dispersion stability in water.

The unit heat of immersion of the presently disclosed oxidized CNT assembly in water is preferably 2,000 mJ/m² or more, more preferably 3,000 mJ/m² or more, and even more preferably 3,500 mJ/m² or more.

When the unit heat of immersion in water is not less than any of the lower limits set forth above, dispersibility and dispersion stability of the oxidized CNT assembly in a polar solvent can be improved.

On the other hand, the unit heat of immersion in water may be 8,000 mJ/m² or less, or may be 6,000 mJ/m² or less.

Note that the unit heat of immersion in water can be adjusted through appropriate alteration of conditions in heat treatment, acid treatment, and so forth during production of the oxidized CNT assembly.

The heat of immersion of the presently disclosed oxidized CNT assembly in water is preferably 30,000 mJ/g or more, more preferably 35,000 mJ/g or more, even more preferably 40,000 mJ/g or more, and further preferably 43,000 mJ/g or more, and is preferably 100,000 mJ/g or less, more preferably 80,000 mJ/g or less, and even more preferably 60,000 mJ/g or less.

Note that the heat of immersion in water can be adjusted through appropriate alteration of conditions in heat treatment, acid treatment, and so forth during production of the oxidized CNT assembly.

The specific surface area of the presently disclosed oxidized CNT assembly is preferably 1 m²/g or more, and is preferably less than 100 m²/g, more preferably 50 m²/g or less, even more preferably 30 m²/g or less, and further preferably 15 m²/g or less.

When the specific surface area is within any of the ranges set forth above, dispersibility and dispersion stability of the oxidized CNT assembly in a polar solvent can be improved. In particular, an oxidized CNT assembly having a specific surface area that is not more than any of the upper limits set forth above has particularly good dispersibility and dispersion stability in a polar solvent.

The unit heat of immersion of the presently disclosed oxidized CNT assembly in n-octane is preferably 150 mJ/m² or more, and more preferably 180 mJ/m² or more, and is preferably 1,000 mJ/m² or less, more preferably 500 mJ/m² or less, and even more preferably 300 mJ/m² or less.

When the unit heat of immersion in n-octane is within any of the ranges set forth above, dispersibility of the oxidized CNT assembly in a polar solvent can be improved.

Note that the unit heat of immersion in n-octane can be adjusted through appropriate alteration of conditions in heat treatment, acid treatment, and so forth during production of the oxidized CNT assembly.

A ratio of the unit heat of immersion in water relative to the unit heat of immersion in n-octane (water/n-octane) for the presently disclosed oxidized CNT assembly is preferably 12 or more, more preferably 15 or more, and even more preferably 18 or more.

When the ratio of the unit heat of immersion in water relative to the unit heat of immersion in n-octane is not less than any of the lower limits set forth above, dispersibility and dispersion stability of the oxidized CNT assembly in a polar solvent can be improved.

On the other hand, the ratio of the unit heat of immersion in water relative to the unit heat of immersion in n-octane may be 100 or less, may be 50 or less, or may be 30 or less, for example.

The heat of immersion of the presently disclosed oxidized CNT assembly in n-octane is preferably 10 mJ/g or more, more preferably 100 mJ/g or more, and even more preferably 500 mJ/g or more, and is preferably 10,000 mJ/g or less, more preferably 5,000 mJ/g or less, even more preferably 3,000 mJ/g or less, and further preferably 2,500 mJ/g or less.

Note that the heat of immersion in n-octane can be adjusted through appropriate alteration of conditions in heat treatment, acid treatment, and so forth during production of the oxidized CNT assembly.

The ratio of the number of oxidized single-walled CNTs relative to the total number of oxidized CNTs in the oxidized CNT assembly is preferably 60% or more, and more preferably 70% or more, and is preferably less than 95%, more preferably less than 90%, even more preferably less than 85%, and further preferably 80% or less. When the ratio of the number of oxidized single-walled CNTs relative to the total number of oxidized CNTs in the oxidized CNT assembly is within any of the ranges set forth above, dispersibility of the oxidized CNT assembly in a polar solvent can be improved.

Note that the ratio of the number of oxidized single-walled CNTs relative to the total number of oxidized CNTs in the oxidized CNT assembly can be adjusted, for example, through appropriate alteration of the ratio of single-walled CNTs in a raw material (for example, a subsequently described CNT assembly) for the oxidized CNT assembly.

The oxygen atom ratio of the oxidized single-walled CNTs is preferably 10 at% or more, and more preferably 15 at% or more. When the oxygen atom ratio of the oxidized single-walled CNTs is 10 at% or more, dispersibility and dispersion stability of the oxidized CNT assembly in a polar solvent can be improved due to further increased electrostatic repulsions between the oxidized single-walled CNTs.

On the other hand, the oxygen atom ratio of the oxidized single-walled CNTs is preferably 20 at% or less, and more preferably 18 at% or less from a viewpoint of effectively inhibiting loss of electrical conductivity, thermal conductivity, and strength of the oxidized single-walled CNTs while also even further increasing dispersibility of the oxidized CNT assembly in a polar solvent.

The other oxidized CNTs may be oxidized multi-walled CNTs, for example, but are not specifically limited thereto. The number of walls of the oxidized multi-walled CNTs is preferably up to five walls. When the oxidized CNTs have fewer walls, various characteristics (electrical conductivity, thermal conductivity, mechanical characteristics, etc.) of various products formed using the oxidized CNTs can be improved.

The ratio of the number of other oxidized CNTs relative to the total number of oxidized CNTs in the oxidized CNT assembly is preferably 49% or less, more preferably 40% or less, even more preferably 30% or less, further preferably 10% or less, even further preferably 5% or less, and yet further preferably 1% or less. Moreover, it is particularly preferable that the oxidized CNT assembly does not include other oxidized CNTs. In other words, it is particularly preferable that the ratio of the number of other oxidized CNTs relative to the total number of oxidized CNTs in the oxidized CNT assembly is 0%.

The oxygen atom ratio of the oxidized CNTs is preferably 10 at% or more, and is preferably 15 at% or more. When the oxygen atom ratio of the oxidized CNTs is 10 at% or more, dispersibility and dispersion stability of the oxidized CNT assembly in a polar solvent can be improved due to further increased electrostatic repulsions between the oxidized CNTs.

On the other hand, the oxygen atom ratio of the oxidized CNTs is preferably 20 at% or less, and more preferably 18 at% or less from a viewpoint of effectively inhibiting loss of electrical conductivity, thermal conductivity, and strength of the oxidized CNTs while also even further increasing dispersibility of the oxidized CNT assembly in a polar solvent.

The average diameter of the oxidized CNTs is preferably 3.5 nm or more, and more preferably 3.7 nm or more, and is preferably 5 nm or less, and more preferably 4.5 nm or less.

When the average diameter of the oxidized CNTs is within any of the ranges set forth above, dispersibility and dispersion stability of the oxidized CNT assembly in a polar solvent can be improved due to further increased electrostatic repulsions between the oxidized CNTs.

The average diameter of the oxidized CNTs referred to in the present specification is a value determined by observing the oxidized CNT assembly using a transmission electron microscope (TEM), obtaining a TEM image, measuring the diameters (external diameters) of 50 oxidized CNTs randomly selected from the obtained TEM image, and taking the arithmetic average of these diameters.

The average length of the oxidized CNTs is preferably 30 nm or more, and more preferably 40 nm or more, and is preferably 120 nm or less, and preferably 90 nm or less.

When the average length of the oxidized CNTs is not less than any of the lower limits set forth above, loss of features of the oxidized CNTs such as electrical conductivity, thermal conductivity, and strength can be inhibited, and, as a result, loss of features of the oxidized CNT assembly can be inhibited. On the other hand, when the average length of the oxidized CNTs is not more than any of the upper limits set forth above, dispersibility of the oxidized CNT assembly in a polar solvent can be improved.

The average length of the oxidized CNTs referred to in the present specification is a value determined by observing the oxidized CNT assembly using a scanning electron microscope (SEM), obtaining an SEM image, measuring the lengths of 50 oxidized CNTs randomly selected from the obtained SEM image, and taking the arithmetic average of these lengths.

### (Method of producing oxidized CNT assembly)

The presently disclosed method of producing an oxidized CNT assembly includes a heat treatment step of performing heat treatment of a CNT assembly including single-walled CNTs in an oxygen-containing atmosphere at higher than 550°C to obtain a pre-oxidation CNT assembly and an acid treatment step of performing acid treatment of the pre-oxidation CNT assembly to obtain an oxidized CNT assembly. With a method of producing an oxidized CNT assembly such as set forth above, it is possible to obtain an oxidized CNT assembly having excellent dispersibility in a polar solvent. Moreover, with a method of producing an oxidized CNT assembly such as set forth above, it is also possible to obtain an oxidized CNT assembly having excellent dispersion stability in a polar solvent.

Note that the presently disclosed oxidized CNT assembly set forth above can advantageously be obtained with the presently disclosed method of producing an oxidized CNT assembly.

The presently disclosed method of producing an oxidized CNT assembly may optionally further include a washing step of washing the oxidized CNT assembly that has been acid treated and a drying step of filtering off and drying the oxidized CNT assembly that has been washed.

### <CNT assembly>

The CNT assembly (raw material) that is used in the presently disclosed method of producing an oxidized CNT assembly is an assembly including CNTs, and may optionally further include components other than the CNTs (hereinafter, also referred to as "other components") to the extent that the object of the present disclosure is not lost. Examples of other components include impurities such as metals. The term "CNTs" as used here is inclusive of various CNTs such as single-walled CNTs and multi-walled CNTs.

In the present specification, the CNT assembly (raw material) normally has a unit heat of immersion in water that is outside of the range for the presently disclosed oxidized CNT assembly described above, and preferably has a unit heat of immersion in water that is less than the lower limit for the unit heat of immersion of the presently disclosed oxidized CNT assembly described above.

The proportional content of other components in the CNT assembly is preferably less than 1 mass%, more preferably 0.5 mass% or less, and even more preferably 0.1 mass% or less. Moreover, it is particularly preferable that the CNT assembly does not include other components. In other words, it is particularly preferable that the proportional content of other components in the CNT assembly is 0 mass%.

The CNT assembly includes single-walled CNTs as the CNTs and may optionally further include CNTs other than single-walled CNTs (hereinafter, also referred to as "other CNTs") as the CNTs.

The ratio of the number of single-walled CNTs relative to the total number of CNTs in the CNT assembly is preferably 51% or more, more preferably more than 70%, even more preferably more than 80%, and further preferably more than 90%. When the ratio of the number of single-walled CNTs relative to the total number of CNTs is not less than any of the lower limits set forth above, it is possible to obtain an oxidized CNT assembly having even better dispersibility and dispersion stability in a polar solvent.

The oxygen atom ratio of the single-walled CNTs may be 4.0 at% or less, may be 2.0 at% or less, or may be 1.5 at% or less, for example.

The other CNTs may be multi-walled CNTs, for example, but are not specifically limited thereto. The number of walls of the multi-walled CNTs is preferably up to five walls.

The ratio of the number of other CNTs relative to the total number of CNTs in the CNT assembly is preferably 49% or less, more preferably less than 30%, even more preferably less than 20%, further preferably 10% or less, even further preferably less than 10%, yet more preferably 5% or less, and yet further preferably 1% or less. Moreover, it is particularly preferable that the CNT assembly does not include other CNTs. In other words, it is particularly preferable that the ratio of the number of other CNTs relative to the total number of CNTs in the CNT assembly is 0%.

The oxygen atom ratio of the CNTs may be 4.0 at% or less, may be 2.0 at% or less, or may be 1.5 at% or less, for example.

The average diameter of the CNTs is preferably 3.5 nm or more, more preferably more than 3.5 nm, and even more preferably 3.7 nm or more, and is preferably 5.0 nm or less, more preferably 4.5 nm or less, and even more preferably 4.0 nm or less. When the average diameter of the CNTs is within any of the ranges set forth above, electrostatic repulsions acting between oxidized CNTs can be increased, and an oxidized CNT assembly having even better dispersibility and dispersion stability in a polar solvent can be obtained.

The average length of the CNTs at the time of CNT synthesis is preferably 600 µm or less, more preferably 500 µm or less, and even more preferably 400 µm or less. When the length of the CNTs at the time of synthesis is not more than any of the upper limits set forth above, this enables efficient production of an oxidized CNT assembly.

On the other hand, the average length of the CNTs is preferably 10 µm or more, more preferably 50 µm or more, and more preferably 100 µm or more. When the average length of the CNTs is not less than any of the lower limits set forth above, loss of characteristics of the CNTs such as electrical conductivity can be effectively inhibited.

The aspect ratio (length/diameter) of the CNTs is preferably more than 10, more preferably more than 100, and even more preferably 1,000 or more. When the aspect ratio of the CNTs is not less than any of the lower limits set forth above, loss of characteristics of the CNTs such as electrical conductivity can be effectively inhibited.

On the other hand, the aspect ratio of the CNTs is preferably 1,000,000 or less, and more preferably 500,000 or less. When the aspect ratio of the CNTs is not more than any of the upper limits set forth above, this enables efficient production of an oxidized CNT assembly.

Note that the aspect ratio of the CNTs can be determined by measuring the diameters and lengths of 100 randomly selected CNTs in the CNT assembly using a transmission electron microscope, and calculating an average value of the ratio of diameter and length (length/diameter).

A ratio 3σ/Av of a value 3σ obtained by multiplying the diameter standard deviation (σ) of the CNTs by 3 relative to the average diameter (Av) of the CNTs is preferably more than 0.20 and less than 0.80, more preferably more than 0.25, even more preferably more than 0.40, and particularly preferably more than 0.50. When 3σ/Av of the CNTs is within any of the ranges set forth above, it is possible to obtain an oxidized CNT assembly having even better dispersibility in a polar solvent.

Note that the "average diameter (Av) of the CNTs" and the "diameter standard deviation (σ: sample standard deviation) of the CNTs" can each be determined by measuring the diameters (external diameters) of 100 randomly selected CNTs in the CNT assembly using a transmission electron microscope. The average diameter (Av) and the standard deviation (σ) of the CNTs may be adjusted by altering the synthesis method or synthesis conditions of the CNTs, or may be adjusted by combining a plurality of types of CNTs obtained by different synthesis methods.

The BET specific surface area of the CNT assembly is preferably more than 1,300 m²/g, and more preferably more than 1,400 m²/g. By using a CNT assembly having a specific surface area that is more than any of the lower limits set forth above, it is possible to efficiently perform the subsequently described heat treatment and acid treatment and to increase production efficiency of an oxidized CNT assembly.

The CNT assembly preferably exhibits a convex upward shape in a t-plot obtained from an adsorption isotherm. In particular, it is more preferable that the CNT assembly has not undergone opening formation treatment of CNTs and exhibits a convex upward shape in a t-plot. By using a CNT assembly that exhibits a convex upward shape in a t-plot obtained from an adsorption isotherm, it is possible to obtain an oxidized CNT assembly having even better dispersibility in a polar solvent.

Typically, adsorption is a phenomenon in which gas molecules are taken onto a solid surface from the gas phase and is categorized as physical adsorption or chemical adsorption depending on the main cause of adsorption. The nitrogen gas adsorption method used for obtaining the t-plot utilizes physical adsorption. In general, when the adsorption temperature is kept constant, the number of nitrogen gas molecules that are adsorbed by CNTs in the CNT assembly increases with increasing pressure. A plot of the relative pressure (ratio of pressure at adsorption equilibrium P and saturated vapor pressure P0) on a horizontal axis and the amount of adsorbed nitrogen gas on a vertical axis is referred to as an "isotherm". The isotherm is referred to as an "adsorption isotherm" in a situation in which the amount of adsorbed nitrogen gas is measured while increasing the pressure and is referred to as a "desorption isotherm" in a situation in which the amount of adsorbed nitrogen gas is measured while decreasing the pressure.

The t-plot is obtained from the adsorption isotherm measured by the nitrogen gas adsorption method by converting the relative pressure to an average thickness t (nm) of an adsorbed layer of nitrogen gas. Specifically, an average adsorbed nitrogen gas layer thickness t corresponding to a given relative pressure is calculated from a known standard isotherm of average adsorbed nitrogen gas layer thickness t plotted against relative pressure P/P0, and the above-described conversion is performed to obtain a t-plot for the CNT assembly (t-plot method of de Boer et al.).

In a sample having pores at its surface, the growth of the adsorbed layer of nitrogen gas is categorized into the following processes (1) to (3). The gradient of the t-plot changes in accordance with processes (1) to (3).
(1) A process in which a single molecule adsorption layer of nitrogen molecules is formed over the entire surface
(2) A process in which a multi-molecule adsorption layer is formed and is accompanied by capillary condensation filling of pores
(3) A process in which a multi-molecule adsorption layer is formed at a surface that appears to be non-porous due to the pores being filled by nitrogen

In a t-plot having a convex upward shape, the plot is on a straight line passing through the origin in a region in which the average adsorbed nitrogen gas layer thickness t is small, but, as t increases, the plot deviates downward from the straight line. When a CNT assembly has the t-plot shape described above, this indicates that the CNTs have a large ratio of internal specific surface area relative to total specific surface area and that numerous openings are formed in the CNTs. As a result, the CNT assembly has a lower tendency to aggregate.

A bending point of the t-plot for the CNT assembly is preferably within a range satisfying 0.2 ≤ t (nm) ≤ 1.5, more preferably within a range satisfying 0.45 ≤ t (nm) ≤ 1.5, and even more preferably within a range satisfying 0.55 ≤ t (nm) ≤ 1.0. When the position of the bending point of the t-plot is within any of the ranges set forth above, characteristics of the CNT assembly further improve, which makes it possible to obtain an oxidized CNT assembly having even better dispersibility in a polar solvent.

The "position of the bending point" is an intersection point of a linear approximation A for process (1) and a linear approximation B for process (3) in the t-plot.

A ratio (S2/S1) of internal specific surface area S2 relative to total specific surface area S1 obtained from the t-plot for the CNT assembly is preferably 0.05 or more, more preferably 0.06 or more, and even more preferably 0.08 or more, and is preferably 0.30 or less. When S2/S1 is not less than 0.05 and not more than 0.30, characteristics of the CNT assembly can be further enhanced, which makes it possible to obtain an oxidized CNT assembly having even better dispersibility in a polar solvent.

In the present specification, measurement of an adsorption isotherm for a CNT assembly, preparation of a t-plot, and calculation of total specific surface area S1 and internal specific surface area S2 based on t-plot analysis can be performed using a BELSORP^{®}-mini (BELSORP is a registered trademark in Japan, other countries, or both), for example, which is a commercially available measurement instrument produced by Bel Japan Inc.

No specific limitations are placed on the method by which the CNTs and the CNT assembly are synthesized. For example, in a method in which during synthesis of CNTs through chemical vapor deposition (CVD) by supplying a feedstock compound and a carrier gas onto a substrate having a catalyst layer for CNT synthesis at the surface thereof, a trace amount of an oxidizing agent (catalyst activating material) is provided in the system to dramatically improve catalytic activity of the catalyst layer (super growth method; refer to WO2006/011655A1), forming the catalyst layer on the substrate surface by a wet process enables efficient synthesis of the CNTs and the CNT assembly.

Note that a commercially available CNT assembly such as ZEONANO^{®} SG101 (ZEONANO is a registered trademark in Japan, other countries, or both) produced by Zeon Corporation, for example, can be used as the CNT assembly (raw material) that is used in the presently disclosed method of producing an oxidized CNT assembly.

### <Heat treatment step>

In the heat treatment step, the CNT assembly including single-walled CNTs is heat treated in an oxygen-containing atmosphere at higher than 550°C to obtain a pre-oxidation CNT assembly. As a result of the CNT assembly undergoing such a heat treatment step, it is possible to increase the number of sites having reaction activity (so-called "edge parts") in pre-oxidation CNTs of the pre-oxidation CNT assembly. As a result, the efficiently of acid treatment in the subsequent acid treatment step can be improved.

The heat treatment temperature is preferably 570°C or higher, and more preferably 600°C or higher, and is preferably 800°C or lower, more preferably 700°C or lower, and even more preferably 650°C or lower.

When the heat treatment temperature is not lower than any of the lower limits set forth above, the number of edge parts in pre-oxidation CNTs of the pre-oxidation CNT assembly further increases, and, as a result, the effect of acid treatment in the subsequent acid treatment step can be further improved. On the other hand, when the heat treatment temperature is not higher than any of the upper limits set forth above, excessive weight reduction of the pre-oxidation CNT assembly can be inhibited.

The heat treatment time may be not less than 0.5 hours and not more than 3 hours, for example.

The specific surface area of the pre-oxidation CNT assembly is preferably 1,400 m²/g or more, and more preferably 1,700 m²/g or more.

When the specific surface area of the pre-oxidation CNT assembly is not less than any of the lower limits set forth above, the effect of acid treatment in the subsequent acid treatment step can be further improved.

On the other hand, the specific surface area of the pre-oxidation CNT assembly may be 5,000 m²/g or less, or may be 3,000 m²/g or less, for example.

No specific limitations are placed on the oxygen-containing atmosphere so long as it is an atmosphere that contains oxygen. For example, the oxygen-containing atmosphere may be air, pure oxygen, a mixed gas atmosphere of oxygen and a gas other than oxygen (for example, a noble gas or nitrogen), or the like.

### <Acid treatment step>

In the acid treatment step, the pre-oxidation CNT assembly is acid treated to obtain an oxidized CNT assembly. By subjecting the pre-oxidation CNT assembly to an acid treatment step such as set forth above, it is possible to obtain an oxidized CNT assembly having excellent dispersibility in a polar solvent. Moreover, by subjecting the pre-oxidation CNT assembly to an acid treatment step such as set forth above, it is also thought to be possible to obtain an oxidized CNT assembly having excellent dispersion stability in a polar solvent.

The acid treatment of the pre-oxidation CNT assembly can be performed by, for example, bringing the pre-oxidation CNT assembly into contact with an acidic solution having a pH of 2 or lower. The method by which an acid is brought into contact with the pre-oxidation CNT assembly is not specifically limited and may, for example, be a method in which the pre-oxidation CNT assembly is added to an acidic solution having a pH of 2 or lower to obtain a mixed liquid. Mixing when obtaining the mixed liquid can be performed through a stirring operation by any method. Moreover, the stirring time when obtaining the mixed liquid is preferably not less than 0.1 hours and not more than 10 hours.

In the acid treatment step, it is preferable that after the mixed liquid is obtained, the mixed liquid is then subjected to refluxing. This makes it possible to obtain an oxidized CNT assembly having even better dispersibility and dispersion stability in a polar solvent.

The reflux temperature during refluxing of the mixed liquid is preferably not lower than 100°C and not higher than 150°C. The reflux time is preferably 3 hours or more, and more preferably 10 hours or more, and is preferably 20 hours or less.

Through the reflux temperature and the reflux time being within any of the ranges set forth above, it is possible to cause sufficient progression of acid treatment and to obtain an oxidized CNT assembly having even better dispersibility and dispersion stability in a polar solvent.

The acidic solution is not specifically limited and may be nitric acid, hydrochloric acid, sulfuric acid, mixed acid, or the like, for example. In particular, it is preferable to use nitric acid because this makes it possible to obtain an oxidized CNT assembly having even better dispersibility and dispersion stability in a polar solvent.

The solvent of the acidic solution is not specifically limited and may be water or any organic solvent (for example, an ester, a ketone, or an alcohol). One of these solvents can be used individually, or two or more of these solvents can be used in combination. Of these solvents, water is preferable.

From a viewpoint of increasing production efficiency of an oxidized CNT assembly, it is preferable that the acid treatment is performed using, as the acidic solution, nitric acid aqueous solution that preferably has a concentration of higher than 40 mass%, more preferably has a concentration of higher than 50 mass%, and even more preferably has a concentration of higher than 60 mass%. Through the above, it is possible to obtain an oxidized CNT assembly having even better dispersibility and dispersion stability in a polar solvent.

In the acid treatment step, it is preferable that the mixed liquid containing the pre-oxidation CNT assembly and the nitric acid aqueous solution is refluxed at a temperature that is at least ± 5°C relative to an azeotropic point of the nitric acid aqueous solution. Through the above, it is possible to cause sufficient progression of the acid treatment and to even further increase production efficiency of an oxidized CNT assembly. Note that the reflux time in this situation is preferably 3 hours or more, and more preferably 10 hours or more, and is preferably 20 hours or less in the same way as previously described.

### <Washing step>

In the washing step, the oxidized CNT assembly that has been acid treated is washed. The method of washing is not specifically limited and may be decantation or the like, for example.

The washing liquid may be water or the like, for example, and is preferably deionized water.

### <Drying step>

In the drying step, the oxidized CNT assembly that has been washed is filtered off and dried. The drying method is not specifically limited and may be a method in which drying is performed by heating (thermal drying) or a method in which drying is performed in a vacuum (vacuum drying), for example. A combination of thermal drying and vacuum drying (hereinafter, also referred to as "thermal vacuum drying") may also be adopted.

In the case of thermal vacuum drying, the drying temperature is preferably 50°C or higher, more preferably 80°C or higher, and even more preferably 100°C or higher, and is preferably 200°C or lower, and more preferably 150°C or lower.

When the drying temperature is not lower than any of the lower limits set forth above, this enables sufficient drying of the oxidized CNT assembly. On the other hand, when the drying temperature is not higher than any of the upper limits set forth above, this enables efficient drying of the oxidized CNT assembly.

The drying time in the drying step may be not less than 0.5 hours and not more than 3 hours, for example.

### (Dispersion liquid)

The presently disclosed dispersion liquid is a dispersion liquid having the oxidized CNT assembly set forth above dispersed in a polar solvent. Since the presently disclosed oxidized CNT assembly has excellent dispersibility in a polar solvent, the dispersion liquid using this oxidized CNT assembly has good dispersion of the oxidized CNT assembly. Note that the presently disclosed dispersion liquid may optionally further contain additives such as a dispersant and a neutralizer.

### <Oxidized CNT assembly>

The presently disclosed oxidized CNT assembly set forth above is used as the oxidized CNT assembly that is used in the presently disclosed dispersion liquid.

The proportional content of the oxidized CNT assembly in the dispersion liquid is preferably 0.01 mass% or more, and more preferably 0.05 mass% or more, and is preferably 1.0 mass% or less, more preferably 0.5 mass% or less, and even more preferably 0.2 mass% or less.

When the proportional content of the oxidized CNT assembly in the dispersion liquid is not less than any of the lower limits set forth above, productivity of a product (for example, an electronic product) produced using the dispersion liquid can be improved. On the other hand, when the proportional content of the oxidized CNT assembly in the dispersion liquid is not more than any of the upper limits set forth above, a dispersion liquid having even better dispersion of the oxidized CNT assembly can be obtained.

### <Polar solvent>

The polar solvent may be a polar solvent that includes a hydroxy group such as water or an alcohol (methanol, ethanol, isopropyl alcohol, etc.); or a polar solvent that does not include a hydroxy group such as an ether (tetrahydrofuran, anisole, diethyl ether, etc.), an ester (ethyl acetate, ethyl benzoate, etc.), a ketone (acetone, 2-butanone, acetophenone, dimethyl ketone, diethyl ketone, etc.), acetonitrile, an amide (N,N-dimethylacetamide, N,N-dimethylformamide, N,N-diethylacetamide, N,N-diethylformamide, etc.), or dimethyl sulfoxide, for example. One of these polar solvents can be used individually, or two or more of these polar solvents can be used in combination. Of these polar solvents, polar solvents that include a hydroxy group are preferable, and water is particularly preferable because these solvents make the dispersion liquid easy to handle and enable good dispersion of the oxidized CNT assembly.

### (Production method of dispersion liquid)

The presently disclosed dispersion liquid can be produced by, for example, mixing the oxidized CNT assembly and the polar solvent to obtain a mixed liquid and dispersing this mixed liquid using a known dispersing treatment method such as ultrasonic dispersing treatment that is used in dispersion of CNT assembly-containing liquids.

Note that in this dispersing treatment, a neutralizer may optionally be added as an additive so as to adjust the pH of the mixed liquid to neutral (roughly pH 6 to pH 8). The neutralizer is not specifically limited and may be an alkaline solution of not lower than pH 9 and not higher than pH 14, and, more specifically, may be sodium hydroxide aqueous solution, ammonia aqueous solution, or the like.

### EXAMPLES

The following provides a more specific description of the present disclosure based on an example. However, the present disclosure is not limited to the following example.

Measurements and evaluations in the example and comparative examples were performed by the following methods.

### <BET specific surface area>

The BET specific surface area (m²/g) of a CNT assembly was measured in accordance with JIS Z8830 using a BET specific surface area analyzer (HM model-1210 produced by Mountech Co., Ltd.). The BET specific surface areas (m²/g) of a pre-oxidation CNT assembly and an oxidized CNT assembly were measured in the same manner.

### <Oxygen atom ratio>

An oxidized CNT assembly was analyzed using an X-ray photoelectron spectroscopy analyzer (VG Theta Probe produced by Thermo Fisher Scientific). The area of an O1s peak and the area of all detected peaks were determined for oxidized CNTs, a ratio (at%) of the amount of oxygen atoms (O) relative to the amount of all constituent atoms at surfaces of the oxidized CNTs (= amount of O atoms/amount of all atoms × 100) was calculated based on the determined areas, and the obtained value was taken to be the oxygen atom ratio (at%) of the CNTs.

Note that in Comparative Example 3, a CNT assembly (raw material) was analyzed using an X-ray photoelectron spectroscopy analyzer (VG Theta Probe produced by Thermo Fisher Scientific), and a value obtained in the same manner as described above was taken to be the oxygen atom ratio (at%) of the CNTs.

### <Ratio of number of oxidized single-walled CNTs relative to total number of oxidized CNTs in oxidized CNT assembly>

An oxidized CNT assembly was observed using a transmission electron microscope (TEM), and a TEM image was obtained. The number of walls was measured for 50 oxidized CNTs that were randomly selected from the obtained TEM image. Moreover, a ratio of the number of oxidized single-walled CNTs relative to the 50 oxidized CNTs was taken to be the "ratio of the number of oxidized single-walled CNTs relative to the total number of oxidized CNTs in the oxidized CNT assembly".

Note that in Comparative Example 3, a CNT assembly (raw material) was observed using a transmission electron microscope (TEM), a TEM image was obtained, the number of walls was measured for 50 CNTs randomly selected from the obtained TEM image, and a ratio of the number of single-walled CNTs relative to the 50 CNTs was adopted. In other words, the ratio for Comparative Example 3 in Table 1 indicates the "ratio of the number of single-walled CNTs relative to the total number of CNTs in the CNT assembly".

### <Unit heat of immersion>

A microcalorimeter (CALVET Calorimeter C-80 produced by Setaram) was used to determine the unit heat of immersion.

Specifically, a sample (oxidized CNT assembly, etc.) was first heat treated at 200°C for 12 hours to remove contained moisture. Next, approximately 0.05 g of the sample was weighed into a glass ampoule (diameter: approximately 5 mm; length: approximately 20 mm) having a nitrogen atmosphere inside thereof, and a gas burner was used to melt and thereby seal the glass ampoule. Next, the glass ampoule was immersed in a sample vessel of the microcalorimeter that had been filled with water. The glass ampoule was then smashed in the water so as to cause mixing (contact) of the sample and the water. The change of heat (mW) generated at the same time as smashing of the glass ampoule (at the same time as mixing) was measured for 10 hours (hr) to obtain a calorific peak (refer to FIG. 1). Note that the sample vessel was maintained at a temperature of 30°C during measurement and that measurement was performed in an air atmosphere. Next, the heat of immersion (mJ/g) was determined (hatched part in FIG. 1) from an area value for the calorific peak. Moreover, the obtained heat of immersion (mJ/g) was divided by the specific surface area (m²/g) of the sample to determine the unit heat of immersion (mJ/m²) in water.

In addition, the unit heat of immersion (mJ/m²) in n-octane was determined in the same manner with the exception that the water was changed to n-octane.

### <Light absorbance ratio>

A dispersion liquid produced in each example or comparative example was filtered and purified using a 0.2 µm syringe filter (produced by Pall Corporation; product name: Acrodisc Syringe Filter) to obtain a purified dispersion liquid. The purified dispersion liquid and a dispersion liquid in the same state as produced in each example or comparative example without undergoing filtration/purification treatment (i.e., a non-purified dispersion liquid) were each used to measure light absorbance with an optical path length of 1 mm and a wavelength of 550 nm using a spectrophotometer (produced by JASCO Corporation; product name: V670). A light absorbance ratio was then determined by the following formula. A larger light absorbance ratio indicates higher dispersibility in a polar solvent (water). Light absorbance ratio = (Light absorbance of purified dispersion liquid)/(Light absorbance of non-purified dispersion liquid)

### (Example 1)

### <Production of oxidized CNT assembly>

### {Preparation of CNT assembly (raw material)}

Single-walled carbon nanotubes (ZEONANO^{®} SG101; average diameter: 3 nm to 5 nm; average length: 100 µm to 600 µm) produced by Zeon Corporation were prepared as a CNT assembly (raw material). The BET specific surface area was measured for this CNT assembly. The result is shown in Table 1.

### {Heat treatment step}

The prepared CNT assembly was heat treated in air at a temperature of 600°C for 1 hour to obtain a pre-oxidation CNT assembly. BET specific surface area was measured for the obtained pre-oxidation CNT assembly. The result is shown in Table 1.

### {Acid treatment step}

A mixed liquid was obtained by adding 0.1 g of the pre-oxidation CNT assembly to 250 mL of nitric acid aqueous solution having a concentration of 45 mass% (10.2 M). This mixed liquid was stirred at room temperature (approximately 25°C) for 8 hours. Next, using a heating mantle, the heater temperature was raised to 180°C so as to cause 15 hours of refluxing in a state in which the liquid temperature of the nitric acid aqueous solution was 110°C and perform acid treatment of the pre-oxidation CNT assembly contained in the mixed liquid to thereby yield a mixed liquid containing an oxidized CNT assembly.

### {Washing step}

The obtained mixed liquid was diluted through addition of 1,800 mL of deionized water. After 15 minutes of settling to cause sedimentation of the oxidized CNT assembly, the supernatant was removed. The liquid volume was subsequently adjusted to 1,800 mL through addition of deionized water.

### {Drying step}

The oxidized CNT assembly was filtered off from the obtained mixed liquid and was subjected to 2 hours of thermal vacuum drying at 100°C. The oxygen atom ratio and BET specific surface area were measured for the oxidized CNT assembly after drying. In addition, the ratio of the number of oxidized single-walled CNTs relative to the total number of oxidized CNTs, the heat of immersion and unit heat of immersion in water, and the heat of immersion and unit heat of immersion in n-octane were determined. The results are shown in Table 1.

### <Production of dispersion liquid>

A mixed liquid was obtained by mixing 0.1 g of the obtained oxidized CNT assembly and 100 g of water. The obtained mixed liquid was adjusted to pH 7.1 through addition of 0.1 mass% ammonia aqueous solution as a neutralizer to obtain a neutralized liquid. Two hours of ultrasonication was then performed using an ultrasonic irradiation device to obtain a dispersion liquid. The light absorbance ratio was determined for the obtained dispersion liquid. The result is shown in Table 1.

### (Comparative Example 1)

Various operations and measurements were performed in the same way as in Example 1 with the exception that the heat treatment step was not performed. The results are shown in Table 1.

### (Comparative Example 2)

Various operations and measurements were performed in the same way as in Example 1 with the exception that the heat treatment temperature in the heat treatment step was changed to 500°C and that refluxing was not performed in the acid treatment step. The results are shown in Table 1.

### (Comparative Example 3)

Various operations and measurements were performed in the same way as in Example 1 with the exception that the CNT assembly (raw material) was used in that form to obtain a dispersion liquid. The results are shown in Table 1.

**[Table 1]**

| | | Example 1 | Comparative Example 1 | Comparative Example 2 | Comparative Example 3 |
|---|---|---|---|---|---|
| Inclusion of heat treatment step | | Yes (600°C × 1 hr) | No | Yes (500°C × 1 hr) | No |
| Inclusion of acid treatment step | | Yes | Yes | Yes (no refluxing) | No |
| Oxygen atom ratio of oxidized CNTs [at%] | | 14 | 5 | 3 | 1 |
| Ratio of number of oxidized single-walled CNTs relative to total number of oxidized CNTs [%] | | 75 | 85 | 90 | 90 |
| Specific surface area [m²/g] | CNT assembly (raw material) | 1300 | 1300 | 1300 | 1300 |
| | After heat treatment | 1730 | - | 1440 | - |
| | After acid treatment | 11 | 33 | 465 | - |
| Heat of immersion [mJ/g] | Water | 44000 | 38400 | 354330 | 34400 |
| | n-Octane | 2100 | 3500 | 56265 | 167000 |
| Unit heat of immersion [mJ/m²] | Water | 4000 | 1164 | 762 | 26 |
| | n-Octane | 191 | 106 | 121 | 128 |
| | | | | | |
| Light absorbance ratio [-] | | 0.9 | 0.6 | 0.3 | 0.1 |

It can be clearly seen from Table 1 that the light absorbance ratio in Example 1 is larger than those in Comparative Examples 1 to 3, and thus the degree of dispersion in a polar solvent is higher.

### INDUSTRIAL APPLICABILITY

According to the present disclosure, it is possible to provide an oxidized carbon nanotube assembly having excellent dispersibility in a polar solvent and a dispersion liquid using the same.

Moreover, according to the present disclosure, it is possible to provide a method of producing an oxidized carbon nanotube assembly having excellent dispersibility in a polar solvent.

## Claims

1. An oxidized carbon nanotube assembly comprising oxidized single-walled carbon nanotubes, wherein
a ratio of a number of the oxidized single-walled carbon nanotubes relative to a total number of oxidized carbon nanotubes in the oxidized carbon nanotube assembly is 51% or more, and
heat of immersion per unit area of the oxidized carbon nanotube assembly in water is not less than 1,500 mJ/m² and not more than 10,000 mJ/m².

2. The oxidized carbon nanotube assembly according to claim 1, having a specific surface area of not less than 1 m²/g and less than 100 m²/g.

3. The oxidized carbon nanotube assembly according to claim 1, wherein heat of immersion per unit area of the oxidized carbon nanotube assembly in n-octane is not less than 150 mJ/m² and not more than 1,000 mJ/m².

4. A dispersion liquid comprising the oxidized carbon nanotube assembly according to any one of claims 1 to 3 dispersed in a polar solvent.

5. A method of producing an oxidized carbon nanotube assembly comprising:
performing heat treatment of a carbon nanotube assembly including single-walled carbon nanotubes in an oxygen-containing atmosphere at higher than 550°C to obtain a pre-oxidation carbon nanotube assembly; and
performing acid treatment of the pre-oxidation carbon nanotube assembly to obtain an oxidized carbon nanotube assembly.

6. The method of producing an oxidized carbon nanotube assembly according to claim 5, wherein nitric acid is used in the acid treatment.
